# EUROPÄISCHE PATENTANMELDUNG

(11) **EP 1 936 780 A2**
(43) Veröffentlichungstag der Anmeldung: **25.06.2008**
(21) Anmeldenummer: 07119567.1
(22) Anmeldetag: 30.10.2007
(51) Int. Cl.: H02K 1/30, H02K 1/27

(54) **Anker für eine elektrische Maschine**

(30) Priorität: 20.12.2006 DE 102006060318
(71) Anmelder: ROBERT BOSCH GMBH, 70442 Stuttgart (DE)
(72) Erfinder: Holzwarth, Bruno, 71701, Schwieberdingen (DE)

(57) **Zusammenfassung**

Ein Anker für eine elektrische Maschine umfasst mehrere auf einer Ankerwelle drehfest angeordnete Lamellen, die von einem magnetischen Ring eingefasst sind, wobei zumindest ein Teil der Lamellen auf der Umfangsseite mindestens eine Klemmnase aufweist, die auf Kontakt zur Innenseite des Rings liegt.

## Beschreibung

Die Erfindung bezieht sich auf einen Anker für eine elektrische Maschine, insbesondere für einen Synchronmotor, nach dem Oberbegriff des Anspruches 1.

### Stand der Technik

In der DE 10 2004 008 936 A1 wird ein Anker für einen elektrischen Gleichstrommotor mit einem auf die Ankerwelle aufgeschobenen Lamellenpaket beschrieben, wobei die Lamellen über den Umfang verteilt eine Mehrzahl radial abstehender Zahnhälse aufweisen, um die jeweils eine Ringspule der Ankerwicklung aufgewickelt ist. Um eine Flussverstärkung des magnetischen Flusses herbeizuführen, sind auf die radiale Außenseite der Zahnhälse Flussleitelemente aufgesetzt, die sich in Umfangsrichtung erstrecken. Die Verbindung zwischen den Zahnhälsen und den Flusselementen erfolgt nach Art eines Druckknopfes, indem in die Stirnflächen der Zähne Verknüpfungslöcher eingebracht sind, in die korrespondierende Verknüpfungsstifte an den Flussleitelementen eindrückbar sind.

Neben den in der DE 10 2004 008 936 A1 gezeigten Gleichstrommotoren sind auch Synchronmotoren bekannt, bei denen ein konstant magnetisierter Rotor synchron von einem bewegten magnetischen Feld im umgebenden Stator bewegt wird. Das magnetische Feld im Rotor wird in der Regel über einen Permanentmagneten erzeugt, der mit der Ankerwelle zu verbinden ist. Hierzu wird der häufig als Ringmagnet ausgeführte Permanentmagnet auf das die Ankerwelle umgebende Lamellenpaket aufgeschoben und mit diesem verbunden, beispielsweise mittels Verkleben oder Aufpressens. Nachteilig hierbei ist aber das verhältnismäßig aufwändige Verfahren und außerdem die Gefahr von Wärmespannungen, die bei einer unterschiedlichen Wärmeausdehnung von den Lamellen und dem Magneten entstehen. Der Permanentmagnet kann dadurch beschädigt werden.

### Offenbarung der Erfindung

Der Erfindung liegt die Aufgabe zugrunde, mit einfachen konstruktiven Maßnahmen einen gattungsgemäßen Anker für eine elektrische Maschine zu schaffen, bei dem die Gefahr wärmebedingter Spannungen reduziert ist.

Diese Aufgabe wird erfindungsgemäß mit den Merkmalen des Anspruches 1 gelöst. Die Unteransprüche geben zweckmäßige Weiterbildungen an.

Der erfindungsgemäße Anker für eine elektrische Maschine, insbesondere für einen elektrischen Synchronmotor, weist auf der Ankerwelle mehrere drehfest angeordnete Lamellen auf, die von einem magnetischen bzw. magnetisierbaren Ring eingefasst sind. Zumindest ein Teil der Lamellen weist auf der Umfangsseite mindestens eine Klemmnase auf, die auf Kontakt zur Innenseite des Rings liegt und den Ring auf der Ankerwelle hält. Diese Klemmnase weist eine hinreichende Festigkeit und Nachgiebigkeit auf, um beim axialen Aufschieben des Rings auf die Lamellen in Achsrichtung elastisch nachgeben zu können, so dass einerseits eine Beschädigung oder Zerstörung der Klemmnase bzw. eine Beeinträchtigung der Mantelinnenfläche des Rings vermieden und andererseits eine hinreichend große Klemmkraft zwischen der Klemmnase an den Lamellen und dem Ring übertragen wird. Diese Klemmkraft, die in Radial- und in Achsrichtung wirkt, reicht aus, um den Ring mit ausreichender Sicherheit in seiner gewünschten axialen Position auf der Ankerwelle zu halten.

Außerdem trägt die Elastizität der Klemmnasen dazu bei, einen möglichen Luftspalt zwischen dem Außenmantel der Lamellen und der Innenseite des Rings so gering wie möglich zu halten, was dadurch erreicht wird, dass die Klemmnasen nur minimal über den Außenumfang der Lamellen überstehen und von dem axial aufzuschiebenden Ring geringfügig umgebogen werden. Die Vermeidung eines Luftspalts zwischen Lamellen und Ring bzw. die Reduzierung diese Luftspalts auf ein Minimum verbessert den magnetischen Fluss und damit auch den Wirkungsgrad der elektrischen Maschine. Es kann aber zweckmäßig sein, den Luftspalt zwischen dem Außenmantel der Lamellen und dem Innenmantel des Rings mit einer Mindestdicke auszubilden, die einerseits so klein wie möglich ausgeführt ist, um den magnetischen Fluss geringst möglich zu beeinträchtigen, andererseits aber groß genug ist, um unterschiedlich große Wärmeausdehnungen von den Lamellen und dem Ring ausgleichen zu können, so dass wärmebedingte Spannungen vermieden werden.

Die Klemmnase ist vorteilhaft einteilig mit der Lamelle ausgebildet und sitzt insbesondere in einer Ausnehmung bzw. Nut, die radial in die Mantelfläche der Lamelle eingebracht ist. Dadurch wird zum einen die Möglichkeit eröffnet, die Klemmnase als einen in Radialrichtung der Lamelle sich erstreckenden Stift auszubilden, der bezogen auf seinen Durchmesser eine verhältnismäßig große Länge aufweist, wodurch das elastische Verhalten der Klemmnase unterstützt wird. Zum andern kann das Überstandsmaß mit hoher Präzision eingestellt werden, mit dem die Klemmnase die äußere Mantelfläche bzw. Einhüllende der Lamelle überragt. Da dieses Maß gemeinsam mit den elastischen Materialeigenschaften der Klemmnase die Klemmkraft bestimmt, die auf den aufzuschiebenden Ring wirkt, ist eine konstruktiv einfach zu realisierende Möglichkeit geschaffen, den Ring auf der Lamelle bzw. dem Lamellenpaket zu befestigen.

Vorteilhafterweise sind mehrere parallel zueinander angeordnete Lamellen zu einem vorgefertigten Lamellenpaket zusammengefasst. Die Lamellen dieses Lamellenpaketes sind über geeignete Verbindungsmittel untereinander verbunden, beispielsweise mittels Noppen stanzpaketiert oder mittels Backlack verbacken (verklebt). Das Lamellenpaket wird als solches auf die Ankerwelle aufgeschoben. Innerhalb des Lamellenpakets sind bevorzugt die Klemmnasen benachbarter Lamellen in gleicher Weise ausgerichtet.

Gemäß einer weiteren vorteilhaften Ausführung können mehrere Lamellenpakete vorgesehen sein, die jeweils eine Mehrzahl einzelner Lamellen umfassen, wobei die Klemmnasen unterschiedlicher Lamellenpakete auch eine unterschiedliche Winkelorientierung haben können. Die stirnseitigen Lamellen eines Lamellenpakets - die Endlamellen - können ohne Klemmnasen ausgebildet sein, um eine Kollision mit der stirnseitigen Lamelle des benachbarten Lamellenpakets durch axial umgebogene Klemmnasen auszuschließen. Auch wenn die äußeren, stirnseitigen Endlamellen ohne Klemmnasen ausgeführt sind, besteht über die Klemmnasen der mittleren Lamellen im Lamellenpaket eine hinreichend große Klemmkraft für die sichere Halterung des Ringes auf den Lamellen.

Eine weitere Verbesserung des Wirkungsgrades wird dadurch erzielt, dass pro Lamelle die Anzahl der Klemmnasen und gegebenenfalls der Ausnehmungen bzw. Nuten, in denen die Klemmnasen angeordnet sind, nur so groß ist, dass die Gesamtklemmkraft als Summe der Klemmkraft der einzelnen Klemmnasen ausreicht, um die Ringmagnete sicher auf den Lamellenpaketen zu fixieren. Es kann vorteilhaft sein, die Anzahl der Klemmnasen in den Ausnehmungen an die Polzahl des Läufers anzupassen. Die Ausnehmungen und Klemmnasen sind insbesondere gleichmäßig über den Umfang verteilt und symmetrisch zu den magnetischen Polen angeordnet.

Werden mehrere Lamellenpakete mit jeweils einer Mehrzahl einzelner Lamellen verbaut, so können die Lamellenpakete winkelversetzt zueinander ausgerichtet oder gleich ausgerichtet sein.

Gemäß einer weiteren vorteilhaften Ausführung ist der magnetische bzw. magnetisierbare Ring von einer Schutzhülle eingefasst, die den Ring vor äußeren mechanischen Beschädigungen schützt. Außerdem verhindert diese Schutzhülle, dass im Falle eines Auseinanderbrechens des Rings ein abgebrochenes Teil zwischen Rotor und Stator eingeklemmt wird, was zu einem Blockieren des Motors führen würde.

Um den Magnetfluss durch die Schutzhülle nicht negativ zu beeinträchtigen, ist diese zweckmäßig aus einem nicht-ferromagnetischen bzw. unmagnetischen Material hergestellt, beispielsweise aus einem austenitischen Stahl. Außerdem ist die Schutzhülle nur mit einer geringen Dicke versehen, wodurch der Magnetfluss und der Wirkungsgrad ebenfalls nur in geringst möglicher Weise beeinträchtigt wird.

Weitere Vorteile und zweckmäßige Ausführungen sind den weiteren Ansprüchen, der Figurenbeschreibung und den Zeichnungen zu entnehmen. Es zeigen:
- Fig. 1: eine stirnseitige Ansicht eines Ankers für eine elektrische Maschine, insbesondere für einen elektrischen Synchronmotor, wobei der Anker eine zentrale, in einem Stator drehbar gelagerte Ankerwelle aufweist, auf die ein Lamellenpaket mit einer Mehrzahl einzelner Lamellen aufgeschoben ist, wobei das Lamellenpaket von einem magnetischen Ring eingefasst ist, der auf der Außenseite eine Schutzhülle aufweist,
- Fig. 2: eine Schnittdarstellung des Ankers gemäß Schnittlinie II-II aus Fig. 1,
- Fig. 3: eine Lamelle in Einzeldarstellung, wobei auf der Umfangsseite der Lamellen Klemmnasen in Form radial verlaufender Klemmstifte ausgebildet sind, die in Nuten bzw. Ausnehmungen eingebracht sind,
- Fig. 4: eine weitere Lamelle ohne Klemmnasen, die als stirnseitige Endlamelle in einem Lamellenpaket eingesetzt wird.

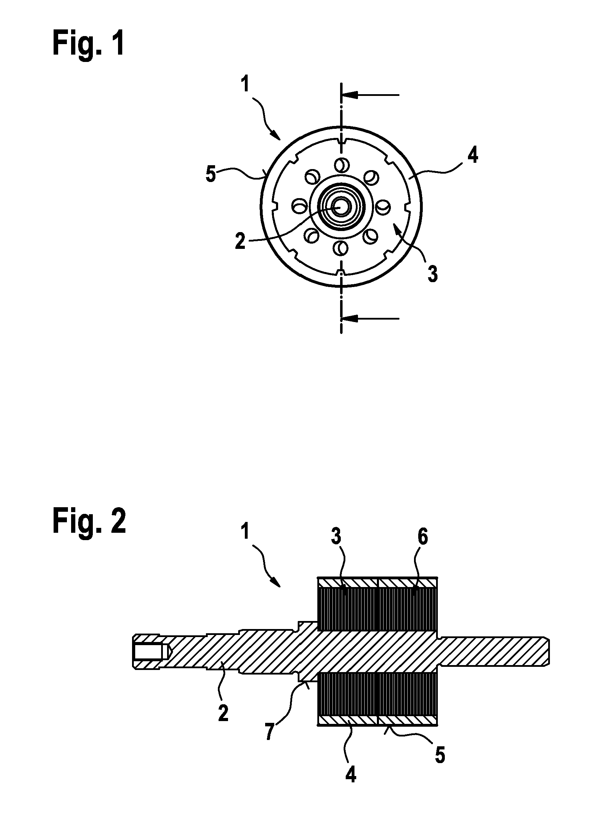

In Fig. 1 ist der Anker 1 für eine elektrische Maschine dargestellt, insbesondere für einen Synchronmotor, wobei der Anker 1 in Zusammenbauposition im Stator des Elektromotors drehbar aufgenommen ist und von einem magnetischen Wechselfeld angetrieben wird. Der Anker 1 umfasst eine Ankerwelle 2, auf die axial ein Lamellenpaket 3 aufgeschoben ist, welches eine Mehrzahl einzelner und zueinander parallel angeordneter, zusammenhängender Lamellen umfasst. Das Lamellenpaket 3 ist von einem magnetischen Ring 4 eingefasst, der auf den Außenmantel der Lamellen des Lamellenpakets 3 aufgeschoben ist. Bei dem magnetischen Ring 4 handelt es sich insbesondere um einen Permanentmagneten. Der magnetische Ring 4 ist von einer Schutzhülle 5 eingefasst, die aus einem widerstandsfähigen, dünnen Material besteht, welches den magnetischen Fluss nicht oder nur geringst möglich beeinträchtigt. Als Material für die Schutzhülle 5 kommen insbesondere nicht-ferromagnetische Materialien in Betracht, beispielsweise ein austenitischer Stahl.

Rotoren können aus einem oder mehreren Lamellenpaketen oder aus Einzellamellen aufgebaut sein. In Fig. 2 ist ein Rotor mit zwei Lamellenpaketen dargestellt. Die Lamellenpakete sind axial auf die Ankerwelle 2 aufgeschoben, so dass sie unmittelbar aneinander grenzen. Zur Begrenzung der axialen Position der Lamellenpakete 3 und 6 kann auf der Ankerwelle 2 ein radial erweiterter Absatz 7 vorgesehen sein. Die beiden Lamellenpakete 3 und 6 werden von einem gemeinsamen magnetischen Ring 4 eingefasst, dessen axiale Länge der Summe der Teillängen der beiden Lamellenpakete 3 und 6 entspricht. Alternativ hierzu ist es aber auch möglich, zwei separate magnetische Ringe für jeweils ein Lamellenpaket vorzusehen. Die Lamellenpakete 3 und 6 sind untereinander gleichartig aufgebaut, sie entsprechen sich jeweils im Hinblick auf die Anzahl der Einzellamellen, den Aufbau der Einzellamellen und die axiale und radiale Dimension.

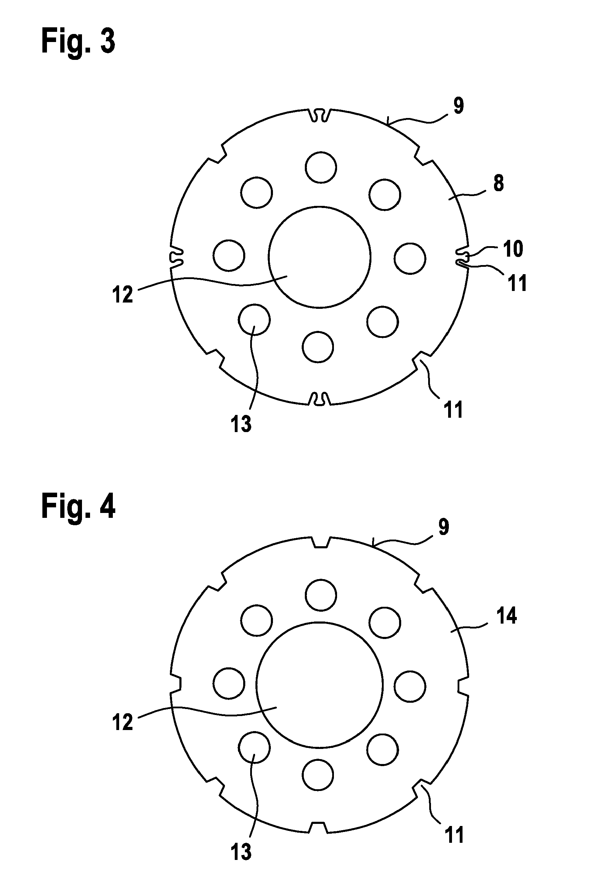

In Fig. 3 ist eine Lamelle 8 in Einzeldarstellung gezeigt. Die Lamelle weist an ihrer Umfangsseite 9 mehrere Klemmnasen 10 auf, die sich in Ausnehmungen bzw. Nuten 11 befinden, die an der Umfangsseite 9 in die Lamelle 8 eingebracht sind, insbesondere eingestanzt sind. Die Klemmnasen 10 erstrecken sich in Radialrichtung vom Grund der Nut 11 ausgehend und überragen die Umfangsseite bzw. Mantelfläche 9 geringfügig. Über den Umfang der Lamelle 8 verteilt sind eine Mehrzahl von Ausnehmungen bzw. Nuten 11 in die Lamelle eingebracht, wobei sich im Ausführungsbeispiel nur in jeder zweiten Nut 11 eine Klemmnase 10 befindet. Die Klemmnasen 10 sind jeweils stiftförmig ausgebildet.

Beim axialen Aufschieben des magnetischen Ringes auf das Lamellenpaket werden die Klemmnasen 10 geringfügig axial umgebogen, da der Innendurchmesser des magnetischen Ringes etwas geringer ausgebildet ist als der Außendurchmesser der Klemmnasen 10. Aufgrund der axialen Umbiegung der Klemmnasen und ihrer Eigenelastizität wird eine Klemmkraft zwischen den Klemmnasen und dem Innenmantel des Rings erzeugt, die in Achsrichtung und in Radialrichtung wirkt und den Ring an seiner gewünschten Position fixiert. Hierbei kann es zweckmäßig sein, zwischen der Mantelfläche 9 der Lamelle 8 und dem Innenmantel des Ringes einen geringen, ringförmigen Luftspalt vorzusehen, um wärmebedingte Dehnungen der Lamellen bzw. des Ringes aufnehmen zu können und dadurch wärmebedingte Spannungen zu vermeiden.

Die Lamelle 8 ist als Stanzteil ausgeführt, die Klemmnasen 10 sind dementsprechend einteilig bzw. einstückig mit der Lamelle ausgebildet. Es handelt sich bei der Lamelle 8 um eine innere Lamelle innerhalb des Lamellenpaketes, die stirnseitigen Endlamellen werden von Lamellen gebildet, die gemäß Fig. 4 ausgeführt sind. In die Lamellen sind außerdem eine Mehrzahl von über den Umfang verteilter Bohrungen 13 eingebracht, die zur Ausrichtung beim Paketieren und zur Reduzierung der Masse dienen. Die Verbindung der Einzellamellen zu Paketen erfolgt zum Beispiel durch Stanzpaketieren mittels Noppen, verbacken (verkleben) mittels Backlack oder Nieten.
Über eine zentrale Ausnehmung 12 wird die Lamelle auf die Ankerwelle aufgeschoben. Die Lamellen respektive Lamellenpakete sind fest mit der Ankerwelle verbunden, zum Beispiel mittels Presssitz.

Die in Fig. 4 dargestellte Lamelle 14 wird innerhalb des Lamellenpaketes als stirnseitige Endlamelle eingesetzt. Die Endlamelle 14 ist im Prinzip gleich aufgebaut wie die innen liegende Lamelle 8 aus Fig. 3, jedoch mit dem Unterschied, dass auf die Klemmnasen in den Ausnehmungen bzw. Nuten 11 verzichtet wird. Dadurch wird der Vorteil erzielt, dass eine Behinderung bzw. Kollision unmittelbar benachbarter Lamellenpakete aufgrund axial umgebogener Klemmnasen vermieden wird.

## Patentansprüche

1. Anker für eine elektrische Maschine, insbesondere für einen Synchronmotor, mit mehreren auf einer Ankerwelle (2) des Ankers (1) drehfest angeordneten Lamellen (8, 14),
**dadurch gekennzeichnet, dass** die Lamellen (8, 14) von einem magnetischen oder magnetisierbaren Ring (4) eingefasst sind und zumindest ein Teil (8) der Lamellen auf der Umfangsseite mindestens eine Klemmnase (10) aufweist, die auf Kontakt zur Innenseite des Rings (4) liegt und den Ring (4) auf den Lamellen hält.

2. Anker nach Anspruch 1,
**dadurch gekennzeichnet, dass** die Klemmnase (10) einteilig mit der Lamelle (8) ausgebildet ist.

3. Anker nach Anspruch 1 oder 2,
**dadurch gekennzeichnet, dass** die Klemmnase (10) die Umfangsfläche der Lamelle (8) überragt.

4. Anker nach einem der Ansprüche 1 bis 3,
**dadurch gekennzeichnet, dass** über den Umfang einer Lamelle (8) verteilt mehrere Klemmnasen (10) vorgesehen sind.

5. Anker nach einem der Ansprüche 1 bis 4,
**dadurch gekennzeichnet, dass** die Klemmnase (10) in einer Ausnehmung (11) in der Mantelfläche der Lamelle (8) angeordnet ist.

6. Anker nach Anspruch 5,
**dadurch gekennzeichnet, dass** über den Umfang verteilt mehrere Ausnehmungen (11) in der Lamelle (8) vorgesehen sind, wobei nur in einem Teil der Ausnehmungen (11) Klemmnasen (10) angeordnet sind.

7. Anker nach einem der Ansprüche 1 bis 6,
**dadurch gekennzeichnet, dass** mehrere Lamellen (8, 14) zu einem vorkonfektionierten Lamellenpaket (3, 6) zusammengefasst sind.

8. Anker nach Anspruch 7,
**dadurch gekennzeichnet, dass** innerhalb eines Lamellenpakets (3, 6) die Klemmnasen (10) benachbarter Lamellen (8) in gleicher Weise ausgerichtet sind.

9. Anker nach Anspruch 7 oder 8,
**gekennzeichnet**, **dass** zumindest zwei Lamellenpakete (3, 6) vorgesehen sind, die axial aneinander grenzend auf der Ankerwelle (2) sitzen.

10. Anker nach Anspruch 9,
**dadurch gekennzeichnet, dass** die Klemmnasen (10) auf Lamellen (8) unterschiedlicher Lamellenpakete (3, 6) winkelversetzt zueinander ausgerichtet sein können.

11. Anker nach einem der Ansprüche 7 bis 10,
**dadurch gekennzeichnet, dass** die stirnseitige Endlamelle (14) eines Lamellenpakets (3, 6) ohne Klemmnasen (10) ausgeführt ist.

12. Anker nach einem der Ansprüche 1 bis 11,
**dadurch gekennzeichnet, dass** zwischen der Mantelfläche der Lamelle (8, 14) und dem Innenmantel des magnetischen bzw. magnetisierbaren Rings (4) ein Luftspalt gebildet ist, in den die Klemmnase (10) einragt.

13. Anker nach einem der Ansprüche 1 bis 12,
**dadurch gekennzeichnet, dass** der magnetische bzw. magnetisierbare Ring (4) von einer Schutzhülle (5) eingefasst ist.

14. Anker nach Anspruch 13,
**dadurch gekennzeichnet, dass** die Schutzhülle (5) aus einem nicht-ferromagnetischen Material besteht, insbesondere aus einem austenitischen Stahl.
